# EUROPEAN PATENT APPLICATION

(11) **EP 4 726 816 A1**
(43) Date of publication of application: **15.04.2026**
(21) Application number: 24205866.7
(22) Date of filing: 10.10.2024
(51) Int. Cl.: H01M 8/0254, C25B 1/04, C25B 9/19, C25B 9/77, C25B 13/08, H01M 8/026, H01M 8/0297

(54) **BIPOLAR PLATE FOR AN ELECTROCHEMICAL CELL**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: WIDUCH, Dennis, 60439 Frankfurt am Main (DE); TADIELLO, Jean-Philippe, 60439 Frankfurt am Main (DE); NESSELBERGER, Markus, 60439 Frankfurt am Main (DE)
(74) Representative: Air Liquide

(57) **Abstract**

Bipolar plate (10) for an electrochemical cell, the bipolar plate comprising:
- one main sheet (12) defining a plane, said horizontal plane (H), and
- at least one spring sheet (14) shaped such that it defines:
. upper peaks (20) and lower peaks (40) alternately distributed along the horizontal plane (H), the spring sheet (14) being deformable between a compressed state and an uncompressed state such that the distance in the vertical direction between the upper peaks (20) and the lower peaks (40) is variable,
. connection sections (60) connecting one upper peak (20) to one lower peak (40),

each connection section (60) includes one horizontal part (62) which is parallel to the horizontal plane (H) when the spring sheet (14) is in the uncompressed state, the horizontal parts (62) being positioned between the upper (20) and the lower (40) peaks with respect to the vertical direction.

## Description

The present invention relates to an electrolyser, more particularly to a bipolar plate of an electrolyser. The electrolyser is preferably used in alkaline water electrolysis.

Such an electrolyser is a device which dissociates a water molecule via an electrochemical reaction by means of a direct current. The electrolyser generally contains a cell stack formed by a plurality of electrochemical cells. Each electrochemical cell usually comprises two electrodes - a cathode and an anode, separated by a diaphragm enabling ionic exchange between the electrodes. The electrolyser also comprises a bipolar plate (BPP) which allows electrical connection between neighbouring cells. The bipolar plate is generally a metallic plate comprising so-called dimples which are in contact with the anode of one cell as well as the cathode of a neighbouring adjacent cell in order to ensure electrical conductivity.

For efficiency purposes, the inter-electrode spacing and contact pressure inside the electrolyser is important. However, electrolysers may contain manufacturing deviations, leading for example to a loss of mechanical contact pressure between electrodes and the diaphragm due to use of rigid internal parts. It is also possible that, in case of pressurized or elevated temperature electrolysis, the internal parts of the cell stack elongate, leading to displacement or misalignment of the electrodes, which results in low efficiencies.

To solve this problem, it is proposed that every electrochemical cell is provided with one or more parts that are able to attenuate or even compensate for those manufacturing deviations. It is known to use asbestos diaphragm to act as an elastic element. With such an elastic diaphragm, the stack of dimples of the bipolar plates can press the electrodes into the diaphragm and the compression of the diaphragm is able to compensate for any manufacturing deviation. However, asbestos is banned, at least in the European Union, and a diaphragm made of zirconium oxide particles coated on a polyphenylene sulfide (PPS) woven mesh can be used. The zirconium oxide diaphragm presents a relatively reduced thickness, notably less that 0.5 mm (millimetres), and is rather flexible. Due to this reduced thickness, the diaphragm is quite stiff and not compressible enough to deliver satisfactory elastic effect to attenuate manufacturing deviations.

It has been proposed, by patent application US 2007/0020505, to use bipolar plates comprising spring-elastic channels having an essentially trapezoidal cross-section, wherein a pressing face and side faces of the channels deform in a way to distribute homogenous compression within the cell. While a homogeneous compression is obtained in the cell, this solution does not meet the needs in terms of acting forces on the electrodes allowing to compensate the manufacturing deviations. Therefore, the difficulty of maintain mechanical contact between cells, and especially electrodes, remains.

The purpose of the present invention is to provide an electrolyser device with a bipolar plate which is able to efficiently compensate manufacturing deviations.

To this end, the invention proposes a bipolar plate for an electrochemical cell, the bipolar plate comprising
* one main sheet defining a plane, called horizontal plane, and
* at least one spring sheet comprising one face configured to be pressed against the main sheet, and one opposing face configured to be pressed against an electrode of the electrochemical cell, the spring sheet being shaped such that it defines:
   - upper peaks and lower peaks alternately distributed along the horizontal plane and configured to be in contact either with the main sheet or with the electrode, the spring sheet being deformable between a compressed state and an uncompressed state such that the distance in the vertical direction between the upper peaks and the lower peaks is variable,
   - connection sections connecting one upper peak to one lower peak,
wherein each connection section includes one horizontal part which is parallel to the horizontal plane when the spring in the uncompressed state, the horizontal parts being positioned between the upper and the lower peaks with respect to the vertical direction.

The proposed bipolar plate thus comprises a main sheet and at least one spring sheet. Advantageously, the main sheet acts as a support sheet for the spring sheet. In addition, due to the shape of the spring sheet, the main sheet is more rigid than the spring sheet.

Thus, the spring sheet is designed to compensate manufacturing deviations which are usually present in electrochemical cells, so that the inter-electrode distance as well as the contact pressure can be optimally maintained for increasing the efficiency of the electrochemical cell. Indeed, the spring sheet has a very optimal shape and design. To this end, the spring sheet is shaped in a way to define alternate upper peaks and lower peaks, i.e. peaks which are vertically offset. It should be understood that upper peaks and lower peaks are arranged at at least two different levels in the vertical direction, which is a direction perpendicular to the horizontal plane. It should also be understood that such alternate upper and lower peaks define a substantially regular surface defined by a series of embossments along the horizontal plane. An upper peak is defined as the highest point of the spring sheet and a lower peak is defined as the lowest point of the spring sheet in the vertical direction. The term "peak" relates to a part of the surface of the spring sheet which is configured to be in contact either with the main sheet or with the electrode when the spring sheet is in an uncompressed state. This surface can be, but not necessarily, flat, pointed, curved or else shaped.

Advantageously, the distance between upper and lower peaks is variable in vertical direction. In particular, the distance varies according to a compression or a force exerted on the spring sheet. Indeed, for example, in case of high pressure or high temperature electrolysis, elongation of electrodes exerts a force on either the upper peaks or the lower peaks to deform them into a compressed state wherein the distance between peaks is reduced. The compressed peaks tend to exert an opposing force trying to regain their uncompressed state, and in doing so the spring sheet presses against the electrodes to prevent them from moving and hence prevent misalignment of internal parts of the electrochemical cell. In another example, when rigid internal parts such as a rigid or stiff diaphragm is used, in case of loss of mechanical contact, the upper and lower peaks may deform by increasing the distance between the upper and lower peaks, in order to press against either side of the electrochemical cell and exert a compression force so that the internal parts are maintained in place.

To improve such an elastic behaviour, each upper and lower peaks are connected by a connection section. This section is designed to allow optimal deformation of the spring sheet. To achieve this, the connection section includes one horizontal part which is positioned between the upper peak and the lower peaks in the vertical direction, at an intermediate level. Contrary to prior art documents, wherein plastic deformation is limited and stress is important, the claimed arrangement of such a horizontal part allows creating significant vacant space between the upper peak and the lower peaks, notably to accommodate maximum deformation of the peaks. Moreover, the horizontal part is easier to deform contrary to inclined connection sections provided in prior art documents. Therefore, the horizontal part allows the peaks to behave like a spring, so that the spring sheet is deformable between the compressed state and the uncompressed state. Since the deformability of the spring sheet is increased, contact pressure within the electrochemical cell is also optimized. More particularly, thanks to increased deformability, there is a larger range of variable distance between upper and lower peaks, hence a larger range of possible contact pressures. This feature not only allows to compensate the manufacturing deviations but also compensate thermal expansion, and this also increases electrochemical cell efficiency.

The bipolar plate may further present one or more of the following characteristics taken separately or in combination.

- Each connection section includes two junction sections on either side of the horizontal part, that is to say:
* a first junction section connecting one end of the horizontal part to a lower peak and
* a second junction section connecting the other end of the horizontal part to an upper peak.
Advantageously, both junction sections include one part substantially plane and opposite curved ends for connecting the plane part to the horizontal part and to upper or lower peaks.

Therefore, the horizontal part is connected to the upper and lower peaks by junction sections which include a plane part and curved ends. The plane part preferably extends vertically or obliquely between the two opposite curved ends. Preferably, the connection section has a substantial "S" shape with curved ends and the plane part joining those curved ends. The curved ends increase the deformability of the horizontal part and hence the variation of distance in the vertical direction between upper and lower peaks. Indeed, the curved ends impart a certain degree of movement to the plane part, be it in the vertical direction or the horizontal direction. The curved ends also allow the horizontal part to bend according to an exerted compression or force.

- The bipolar plate comprises a first spring sheet and a second spring sheet on either side of the main sheet:
* the first spring sheet comprising one face configured to be pressed against the main sheet, and one opposing face configured to be pressed against an electrode of the electrochemical cell, and
* the second spring sheet positioned opposite to the first spring sheet relative to the main sheet, the second spring sheet comprising one face configured to be pressed against the main sheet, and one opposing face configured to be pressed against another electrode of a cell stack comprising the electrochemical cell,
each of the first and the second spring sheets being shaped such that it defines upper peaks and lower peaks alternately distributed as recited above.

Therefore, the proposed bipolar plate comprises three layers: a main sheet and two spring sheets arranged on either side of the main sheet. The main sheet is relatively rigid as compared to the two spring sheets. In the electrochemical cell, one spring sheet is in contact with an electrode of said cell, and the second spring sheet is in contact with an electrode of the neighbouring adjacent cell. For example, one spring sheet is in contact with the anode of the electrochemical cell and the second spring sheet is in contact with the cathode of the neighbouring adjacent cell to maintain electrical connection between cells in the cell stack. Also, in case of compression incurred on the upper or lower peaks, both the spring sheets take support on the same main sheet to ensure homogeneous contact pressure. Furthermore, by providing a spring sheet on both sides of the main sheet, a combined effect inside the cell stack is produced to compress neighbouring cells together in the cell stack in order to prevent loss of mechanical contact inside the electrolyser.

- The two spring sheets are in a staggered arrangement, i.e. each upper peak of the first spring sheet is substantially aligned in the vertical direction with each lower peak of the second spring sheet and each lower peak of the first spring sheet is substantially aligned in the vertical direction with each upper peak of the second spring sheet.

By "substantially", it is understood that at least a part of the upper peak of the first spring sheet is aligned in the vertical direction with a part of a lower peak of the second spring sheet. The same goes for the alignment of the lower peak of the first spring sheet with the upper peak of the second peak of the second spring sheet.

The staggered arrangement distributes the elastic behaviour of both the first and second spring sheets along the whole surface of the main sheet, such that other cell components are integrated into the elastic behaviour of these spring sheets. Therefore, other cell components are able to bend or deform when the spring sheets changes from one state to another. For example, when the spring sheets are brought to the compression state, the staggered arrangement allows other cell components bend or move accordingly with the spring sheets to maintain mechanical contact. Also, the bending of other cell components ensures that there is no gap between the diaphragm and electrodes of the electrochemical cell, hence improving ion exchange and cell efficiency.

- The horizontal part comprises a length equal to or greater than the length of the upper peak and the lower peak in the uncompressed state, preferably the length of the upper peak and the lower peak is comprised between 4 and 8 mm (millimetres).

By providing a longer horizontal part, the junction sections can be more easily deformed to cause variation of distance between the upper and lower peaks in the vertical direction. In particular, a longer horizontal part has a stronger leverage of the curved ends to cause their deformation.
- The length of the upper peak is different from the length of the lower peak.
- The length of the upper peak is similar to the length of the lower peak.
- The length of the upper peak is smaller than the length of the lower peak.
- The length between two consecutive lower peaks is comprised between 25 to 45 mm and the horizontal part defines a length comprised between 4 to 8 mm, preferably between 5 and 6 mm.

The spring sheet is preferably provided with a repetitive pattern comprising an upper peak interposed between two lower peaks, and two connection sections respectively connecting the ends of the two lower peaks to the upper peaks. This repetitive pattern preferably presents a length comprised between 25 to 45 mm. This length is considered in reference to the horizontal plane. More preferably, the horizontal part of the connection sections defines a length comprised between 4 to 8 mm. These length values are advantageous as they require smaller overall forces to compress the upper and lower peaks while achieving more than necessary contact pressure within the electrochemical cells.
- The at least one spring sheet comprises a plurality of holes. The holes allow gas and electrolyte flow during electrolysis process.
- Each hole presents a diameter comprised between 2 mm to 4 mm. The claimed diameter is advantageous for optimal gas and electrolyte flow during electrolysis process.
- The holes are spaced from each other by a distance comprised between 8 and 12 mm, preferably a distance of around 10 mm. By the term "around", it is understood that from the range of values precited, the distance between holes varies more or less by 5% (percent). The claimed distance values are favourable as they allow gas exchange without hindering the elastic behaviour of the spring sheet.

The present invention also relates to an electrolyser comprising a plurality of electrochemical cells forming a cell stack, wherein each electrochemical cell comprises an anode, a cathode, an ion exchange membrane, called diaphragm, interposed between the anode and the cathode, and a bipolar plate as described above, said bipolar plate being positioned in contact with the anode or the cathode.

The electrolyser may further present one or more of the following characteristics taken separately or in combination.
- The electrolyser is an alkaline water type electrolyser. An alkaline electrolysis is a type of electrolyser in which the electrodes operate in a liquid alkaline electrolyte.
- The bipolar plate is positioned in contact with the anode, said bipolar plate being welded on the anode.

In an alkaline electrolysis type electrolyser, oxides may be produced on the anode side, which are non-conductive. By welding the anode, the bipolar plate ensures a close contact with the anode to further ensure the electrical connection within the electrochemical cell.
- The at least one spring sheet is made of nickel or a nickel alloy.

### Brief description of figures

The invention will be better understood and other characteristics and advantages will appear at the reading of the following description, given in an illustrative and non-limiting fashion, referring to the annexed figures, in which:
[Fig. 1] depicts a schematic view of an electrolyser comprising several electrochemical cells each including a bipolar plate according to the present invention.
[Fig. 2] depicts a partial inside view of two electrochemical cells as represented in figure 1.
[Fig. 3] depicts an exploded schematic view of an electrochemical cell isolated from the electrolyser represented in figure 1.
[Fig. 4] depicts a schematic cross-section of a bipolar plate according to the present invention, taken from the electrochemical cell of figure 2.
[Fig. 5] depicts a schematic representation of a spring sheet of the bipolar plate represented in figure 4, the spring sheet being in an uncompressed state.
[Fig. 6] depicts a schematic representation of the same spring sheet represented in figure 5, the spring sheet being in a compressed state.
[Fig. 7] depicts a schematic representation of another embodiment of a spring sheet.
[Fig. 8a] and [Fig. 8b] depict alternative shapes of the spring sheet of figure 5.

### Detailed description

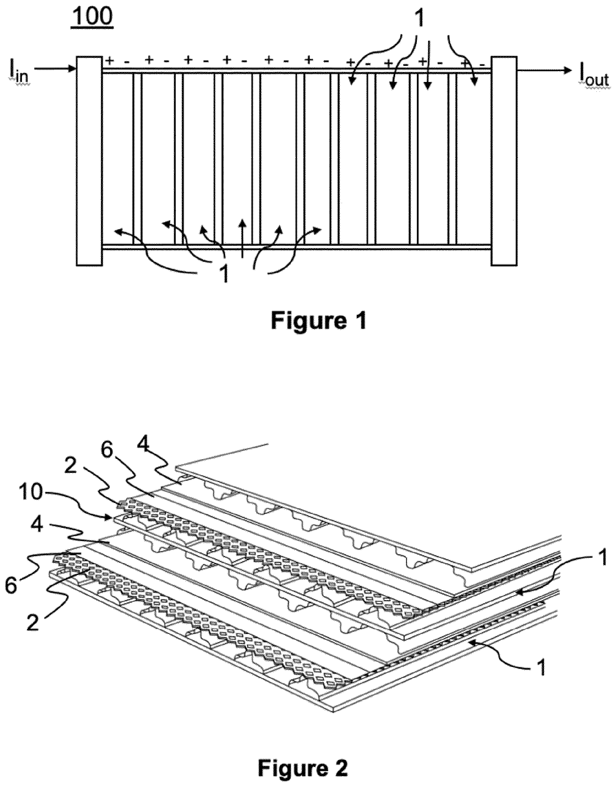

Figure 1 is a schematic representation of an electrolyser 100 comprising a plurality of electrochemical cells 1 stacked together forming a cell stack. Such an electrolyser 100 can comprise up to hundreds of electrochemical cells 1, for example between three hundred electrochemical cells and six hundred electrochemical cells. It should be noted that figure 1 is schematic and not fully illustrative of a real electrolyser. The electrolyser 100 is configured to dissociate a molecule via an electrochemical reaction by means of a direct current, wherein an input current (Iᵢₙ) is supplied to the cell stack for an electrolysis reaction to take place. Preferably, the electrolyser 100 is an alkaline type electrolyser, wherein a liquid alkaline electrolyte is used. Figure 2 shows an inside view of the electrolyser 100, in particular figure 2 shows at least two electrochemical cells 1, each comprising two electrodes 2, 4, an ion exchange membrane, called diaphragm 6 and a bipolar plate 10.

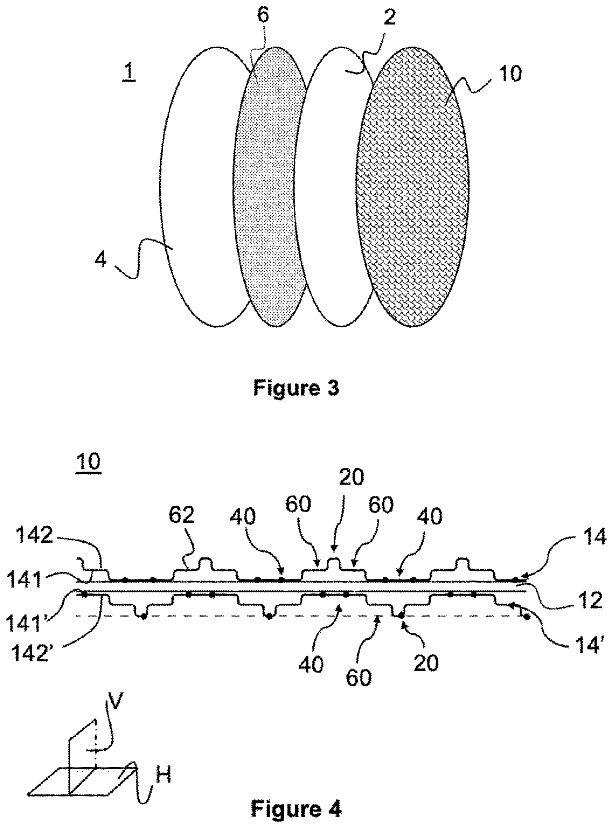

A single electrochemical cell 1 isolated from figure 1, is very schematically represented on figure 3. The electrochemical cell 1 comprises an anode 2, a cathode 4 and ion exchange membrane, called diaphragm 6, interposed between the anode 2 and the cathode 4. The electrochemical cell 1 further comprises a bipolar plate 10 which is positioned in contact with the anode 2. Of course, the position of the bipolar plate 10 is not limited to its placement next to the anode 2. Indeed, the bipolar plate 10 can also be positioned next to the cathode 4. That being said, in the present example wherein the electrolyser 100 is an alkaline water type electrolyser, the bipolar plate 10 is preferably welded on the anode 2. In the example illustrated in figure 2, the bipolar plate 10 presents a face placed in contact with the anode 2 and another face configured to be in contact with the neighbouring adjacent electrochemical cell, more precisely with the cathode of the neighbouring adjacent electrochemical cell. A detailed description of the bipolar plate 10 is provided below.

Referring to figure 4, a cross-section of the bipolar plate 10 is represented. The bipolar plate 10 comprises one main sheet 12 defining a plane, called horizontal plane H, and two spring sheets 14, 14' on either side of the main sheet 12. The bipolar plate 10 illustrated thus comprises three layers: the main sheet 12 and two spring sheets 14, 14' arranged on either side of the main sheet 12. The main sheet 12 is relatively rigid as compared to the two spring sheets 14, 14', and acts as a support sheet. The first spring sheet 14 comprises one face 141 configured to be pressed against the main sheet 12, and one opposing face 142 configured to be pressed against an electrode 2, 4 of the electrochemical cell 1. In the illustrated example, the opposing face 142 is pressed against the anode 2. The second spring sheet 14' is positioned opposite to the at least one spring sheet relative to the main sheet 12. Like the first spring sheet 14, the second spring sheet 14' comprises one face configured 141' to be pressed against the main sheet 12, and one opposing face 142' configured to be pressed against another electrode of a neighbouring electrochemical cell 10 of the cell stack. In the illustrated example, the opposing face 142' of the second spring sheet 14' is pressed against the cathode 4 of a neighbouring electrochemical cell 1 to establish and maintain an electrical connection within the cell stack. In figure 3, the bipolar plate 10

The two spring sheets 14, 14' are similar in shape. Further, each spring sheet 14, 14' is preferably made of nickel or a nickel alloy, preferably an alloy with a very high nickel content, for example more than 99% nickel.

In the following description, only one spring sheet 14 will be described in detail. It is understood that the features of the described spring sheet apply to the other spring sheet 14'. Also, the bipolar plate 10 according to the present invention does not necessarily require two spring sheets, at least one spring sheet is required for its adequate application.

Each of the spring sheets 14, 14', or at least one spring sheet is shaped such that it defines:
. upper peaks 20 and lower peaks 40 alternately distributed along the horizontal plane H and configured to be in contact either with the main sheet 12 or with the electrode 2, 4, and
. connection sections 60 connecting one upper peak 20 to one lower peak 40.

For better understanding of the upper peaks 20 and lower peaks 40, the first spring sheet 14 is taken into consideration. As shown on figure 4, the first spring sheet 14 comprises alternating upper peaks 20 and lower peaks 40, the upper peaks being in contact with the anode 2, and the lower peaks being in contact with the main sheet 12.

Hence, the spring sheet 14 comprises alternating upper peaks 20 and lower peaks 40 which are arranged at two different levels in a vertical direction (V₁) which is defined as a direction perpendicular to the horizontal plane (H). It is to be understood that the vertical direction (V₁) belongs to a vertical plane V. Upper peaks 20 and lower peaks 40 are connected by connection sections 60. In particular, each connection section 60 includes one horizontal part 62 which is parallel to the horizontal plane H when the spring sheet is in an uncompressed state. The horizontal part 62 is positioned between an upper peak 20 and a lower peak 40 in the vertical direction V₁ such that the horizontal part 62 is arranged at an intermediate level between an upper peak 20 and lower peak 40 in the vertical direction V₁. Such an arrangement in two different levels creates a significant vacant space between the upper peaks 20 and the lower peaks 40, notably to accommodate maximum deformation of these peaks 20, 40. The horizontal part 62 allows the upper 20 and lower 40 peaks to deform between a compressed state and an uncompressed state such that the distance in the vertical direction between the upper peaks 20 and the lower peaks 40 is variable.

Furthermore, the two spring sheets 14, 14' are in a staggered arrangement, i.e. each upper peak 20 of the first spring sheet 14 is substantially aligned in the vertical direction V₁ with each lower peak 40 of the second spring sheet 14' and each lower peak 40 of the first spring sheet 14 is substantially aligned in the vertical direction V₁ with each upper peak 20 of the second spring sheet 14'. The staggered arrangement distributes the elastic behaviour of both the first and second spring sheets 14, 14' along the whole surface of the main sheet 12, such that other cell components, for example the electrodes 2, 4 and/or the diaphragm 6, are integrated into the elastic behaviour of these spring sheets 14, 14'. Therefore, the other cell components are able to bend or deform when the spring sheets 14, 14' changes from one state to another.

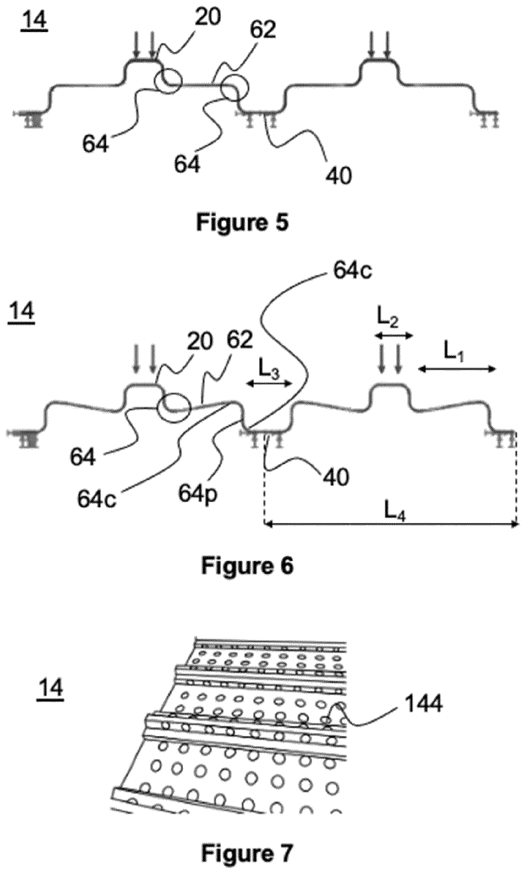

Figures 5 and 6 show a single spring sheet 14 isolated from the bipolar plate 10 arrangement of figure 4. In particular, the spring sheet 14 is in the uncompressed state wherein the horizontal part 62 is parallel to the plane of the main sheet 12. When a force or a pressure is applied on the upper peak 20, for example due to stack expansion, notably during high pressure or high temperature electrolysis, elongation of electrodes exerts a force on either the upper peaks 20 to deform them from an uncompressed state into a compressed state wherein the distance between peaks in vertical direction V₁ is reduced (figure 6). The compressed peaks tend to exert an opposing force trying to regain their uncompressed state, and in doing so the spring sheet 14 presses against the electrodes 2, 4 to prevent them from moving and hence prevent misalignment of internal parts of the electrochemical cell 1. In another example, when internal parts such as a thin and stiff diaphragm 6 is used, in case of loss of mechanical contact, the upper 20 and lower 40 peaks deform, for example from a compressed to an uncompressed state by increasing the distance between the upper 20 and lower 40 peaks, in order to press against either side of the electrochemical cell 1 and exert a compression force so that the internal parts are maintained in place.

To further increase the deformability of the spring sheets, each connection section 60 includes two junction sections 64 on either side of the horizontal part 62, that is to say:
* a first junction section 64 connecting one end of the horizontal part 62 to a lower peak 40 and
* a second junction section 64 connecting the other end of the horizontal part 62 to an upper peak 20.

The junction sections 64 each includes one part substantially plane 64p and opposite curved ends 64c (figure 6) for connecting the plane part 64p to the horizontal part 62 and or to upper 20 or lower 40 peaks. The plane part 64p extends preferably vertically or slightly obliquely relative in the vertical direction. For example, a slight angle of less than 5° is observed due to manufacturing reasons. Of course, the angle could be larger than 5*.

Indeed, the curved ends 64c increase the deformability of the horizontal part 62 and hence the deformability of upper 20 and lower 40 peaks. The curved ends 64c impart a certain degree of movement to the horizontal part 62, be it in the vertical direction or the horizontal direction. The curved ends 64c also allow the horizontal part 62 to bend according to an exerted compression or force.

Furthermore, the relative length of the horizontal part 62 and the upper 20 or lower 40 peaks allow increasing the deformability of the spring sheet 14, 14'. Advantageously, the horizontal part 62 comprises a length L₁ equal to or greater than the length L₂, L₃ of the upper peak 20 and/or the lower peak 40. Preferably, the length L₂, L₃ of the upper peak 20 and/ or the lower peak 40 is comprised between 4 and 8 mm (millimetres). In the illustrated examples of figures 5 and 6, the length L₂ of the upper peak 20 is smaller than the length L₃ of the lower peak 40. But the invention is not limited to these examples, the length L₂ of the upper peak 20 may be greater or similar to the length L₃ of the lower peak 40.

More advantageously, the length L₄ between two consecutive lower peaks 40 is comprised between 25 to 45 mm and the horizontal part 62 defines a length L₁ comprised between 4 to 8 mm, preferably between 5 and 6 mm. In such configuration, smaller overall forces are required to compress the upper 20 and lower 40 peaks while achieving more than necessary contact pressure within the electrochemical cells 1.

Figure 7 depicts an isolated spring sheet 14 comprises holes 144. Such holes allow gas and electrolyte flow during electrolysis process. Each hole 144 presents a diameter comprised between 2 mm to 4 mm which is optimal for gas and electrolyte flow during electrolysis process. Furthermore, the holes 144 are spaced from each other by a distance comprised between 8 and 12 mm, preferably a distance of around 10 mm.

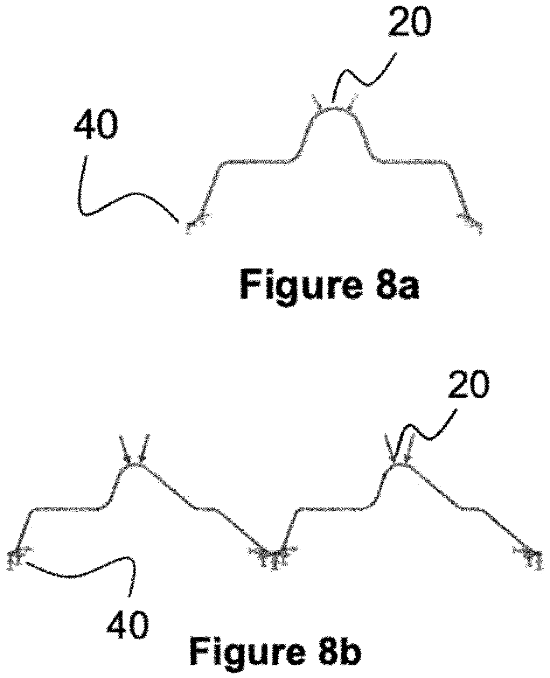

Figure 8a and figure 8b depict alternative shapes of the spring sheet of figure 5. On figure 8a, upper peaks 20 and lower peaks 40 are curved, as well as on figure 8b. On figure 8b, the horizontal parts 62 have different lengths on either side of upper peaks 20.

### Reference list

100: electrolyser
1: electrochemical cell
2: anode
4: cathode
6: diaphragm
10: bipolar plate
12: main sheet
14: first spring sheet
14' second spring sheet
141: one face of first spring sheet 14
142: opposing face of first spring sheet 14
141': one face of second spring sheet 14'
142 : opposing face of second spring sheet 14'
144: through hole
20: upper peak
40: lower peak
60: connecting section
62: horizontal part
64: junction sections
64p: plane part of the junction section
64c: curved part of the junction section
H: horizontal plane
V: vertical plane
V₁: vertical direction
L₁: length of horizontal part 62
L₂: length of upper peak 20
L₃: length of lower peak 40
L₄: length between two lower peaks 40.

## Claims

1. Bipolar plate (10) for an electrochemical cell (1), the bipolar plate (10) comprising
- one main sheet (12) defining a plane, called horizontal plane (H), and
- at least one spring sheet (14, 14') comprising one face (141, 141') configured to be pressed against the main sheet (12), and one opposing face (142, 142') configured to be pressed against an electrode (2, 4) of the electrochemical cell (1), the spring sheet (14, 14') being shaped such that it defines
. upper peaks (20) and lower peaks (40) alternately distributed along the horizontal plane (H) and configured to be in contact either with the main sheet (12) or with the electrode (2, 4), the spring sheet (14, 14') being deformable between a compressed state and an uncompressed state such that the distance in the vertical direction between the upper peaks (20) and the lower peaks (40) is variable,
. connection sections (60) connecting one upper peak (20) to one lower peak (40),
**characterized in that** each connection section (60) includes one horizontal part (62) which is parallel to the horizontal plane (H) when the spring sheet (14, 14') is in the uncompressed state, the horizontal parts (62) being positioned between the upper (20) and the lower peaks (40) with respect to the vertical direction.

2. Bipolar plate (10) according to the preceding claim, wherein each connection section (60) includes two junction sections (64) on either side of the horizontal part, that is to say:
- a first junction section (64) connecting one end of the horizontal part (62) to a lower peak (40) and
- a second junction section (64) connecting the other end of the horizontal part (62) to an upper peak,
the junction sections (64) including one part (64p) substantially plane and opposite curved ends (64c) for connecting the plane part to the horizontal part (62) and to upper (20) or lower (40) peaks.

3. Bipolar plate (10) according to any one of the preceding claims, comprising a first spring sheet (14) and a second spring sheet (14') on either side of the main sheet (12):
- the first spring sheet (14) comprising one face (141) configured to be pressed against the main sheet (12), and one opposing face (142) configured to be pressed against an electrode (2, 4) of the electrochemical cell (1), and
- the second spring sheet (14') positioned opposite to the first spring sheet (14) relative to the main sheet (12), the second spring sheet (14') comprising one face (141') configured to be pressed against the main sheet (12), and one opposing face (142') configured to be pressed against another electrode (2, 4) of a cell stack comprising the electrochemical cell (1),
each of the first (14) and the second (14') spring sheets being shaped such that it defines upper peaks (20) and lower peaks (20) alternately distributed as recited in claim 1.

4. Bipolar plate (10) according to the preceding claim, wherein the two spring sheets (14, 14') are in a staggered arrangement, i.e. each upper peak (20) of the first spring sheet (14) is substantially aligned in the vertical direction with each lower peak (40) of the second spring sheet (14') and each lower peak (40) of the first spring sheet (14) is substantially aligned in the vertical direction with each upper peak (20) of the second spring sheet (14').

5. Bipolar plates (10) according to any one of the preceding claims, wherein the horizontal part (62) comprises a length (L₁) equal to or greater than the length (L₂) of the upper peak (20) and the lower peak (40) in the uncompressed state, preferably the length (L₂) of the upper peak (20) and the lower peak (40) is comprised between 4 and 8 mm (millimetres).

6. Bipolar plate (10) according to any one of the preceding claims, wherein the length (L₄) between two consecutive lower peaks (40) is comprised between 25 to 45 mm and the horizontal part (62) defines a length (L₁) comprised between 4 to 8 mm, preferably between 5 and 6 mm.

7. Bipolar plate (10) according to any one of the preceding claims, wherein the at least one spring sheet (14, 14') comprises a plurality of holes.

8. Bipolar plate (10) according to the preceding claim wherein each hole presents a diameter comprised between 2 mm to 4 mm.

9. Bipolar plate (10) according to any one of claims 7 or 8, wherein the holes are spaced from each other by a distance comprised between 8 and 12 mm, preferably a distance of around 10 mm.

10. Electrolyser (100) comprising a plurality of electrochemical cells (1) forming a cell stack, wherein each electrochemical cell (1) comprises an anode (2), a cathode (4), an ion exchange membrane, called diaphragm (6), interposed between the anode (2) and the cathode (4), and a bipolar plate (10) according to any one of the preceding claims, the bipolar plate (10) being positioned in contact with the anode (2) or the cathode (4).

11. Electrolyser (100) according to the preceding claim, which is an alkaline water type electrolyser.

12. Electrolyser (100) according to the preceding claim, wherein the bipolar plate (10) is positioned in contact with the anode, the bipolar plate (10) being welded on the anode (2).

13. Electrolyser (100) according to any one of preceding claims 10 to 12, wherein the at least one spring sheet (14, 14') is made of nickel or a nickel alloy.
